# FASCICULE DE BREVET EUROPEEN

(11) **EP 3 074 244 B1**
(45) Date de publication et mention de la délivrance du brevet: **12.09.2018**
(21) Numéro de dépôt: 14802081.1
(22) Date de dépôt: 24.11.2014
(51) Int. Cl.: B60C 11/03

(54) **BANDE DE ROULEMENT DE PNEU**
REIFENLAUFFLÄCHE
TIRE TREAD

(30) Priorité: 26.11.2013 FR 1361617
(43) Date de publication de la demande: 05.10.2016
(73) Titulaire: Compagnie Générale des Etablissements Michelin, 63000 Clermont-Ferrand (FR)
(72) Inventeur: MARLIER, Fabien, 63040 Clermont-Ferrand Cedex 9 (FR)
(74) Mandataire: Diernaz, Christian
(86) Numéro de dépôt international: PCT/EP2014/075438
(87) Numéro de publication internationale: WO 2015/078824

(56) Documents cités:
- WO-A1-2011/039194
- DE-A1- 10 309 759

## Description

### DOMAINE DE L'INVENTION

L'invention concerne les bandes de roulement pour pneus et plus particulièrement les dessins de sculpture de ces bandes ainsi que les pneus pourvus de telles bandes dont les performances en drainage de l'eau présente par temps de pluie sur la chaussée sont rendues plus pérennes, ces bandes de roulement n'étant pas pénalisées en vitesse d'usure.

### ÉTAT DE LA TECHNIQUE

De façon connue, l'utilisation de pneus dans des conditions de roulage par temps de pluie requiert une élimination la plus rapide possible de l'eau dans la région de contact du pneu avec la chaussée afin d'assurer un contact du matériau constituant la bande de roulement avec cette chaussée. L'eau qui n'est pas repoussée sur l'avant du pneu s'écoule ou est captée en partie dans les rainures formées dans la bande de roulement du pneu.

Ces rainures forment un réseau d'écoulement qui se doit d'être pérenne c'est-à-dire être efficace pendant toute la durée d'usage d'un pneu entre son état neuf et son retrait.

Pour les pneus destinés aux essieux directeur ou porteur d'un véhicule poids lourd, il est usuel de pourvoir la bande de roulement de ces pneus avec des rainures circonférentielles (ou encore longitudinales) dont la profondeur est égale à l'épaisseur totale de la bande de roulement (cette épaisseur totale ne prenant pas en compte compter l'épaisseur éventuellement prévue pour permettre un renouvellement partiel des rainures). Ainsi, il est possible d'obtenir une bande de roulement ayant une performance en drainage de l'eau présente sur la route qui est toujours au-dessus d'une performance minimale dite performance de sécurité et cela quel que soit le niveau de l'usure de cette bande.

Pour les pneus de l'état de la technique, le volume total de creux est en règle générale allant de 10% à 25% du volume total de la bande de roulement destiné à être usé au cours du roulage (le volume total correspondant au volume de matière auquel est ajouté ledit volume total de creux). On constate que ces pneus ont un volume de creux disponible dans l'aire de contact qui est relativement important à l'état neuf (disponible signifiant que ce volume est potentiellement susceptible d'être parcouru par l'eau présente sur la chaussée). Le volume de creux s'ouvrant sur la surface de roulement dans le contact est évalué lorsque le pneu est soumis à ses conditions nominales de gonflage et d'écrasement en statique telles que définies par le standard E.T.R.T.O..

Si des rainures ou plus généralement des cavités sont indispensables au drainage de l'eau dans la région de contact avec une chaussée, la diminution de matière qui en résulte sur la bande peut affecter sensiblement la performance en usure de cette bande et en conséquence réduire la durée d'utilisation du pneu résultant d'une augmentation de la vitesse d'usure. D'autres performances du pneu peuvent aussi être affectées et notamment les performances en comportement, en bruit en roulage, en résistance au roulement. Il est également observé que ces rainures formées pour avoir une profondeur utile égale à la hauteur de bande à user peuvent être la cause de problèmes d'endurance. Dans certaines conditions de roulage, des objets étrangers comme des cailloux peuvent être capturés dans ces rainures et venir agresser le fond de ces rainures et générer l'apparition de cassures dans le caoutchouc.

La réalisation d'une pluralité de rainures sur une bande de roulement a donc pour inconvénient de réduire la quantité de matière de bande pour une largeur donnée de bande et par voie de conséquence de réduire la durée d'utilisation du pneu à cause d'une vitesse d'usure trop élevée.

Par ailleurs, les rainures génèrent un abaissement des rigidités de compression et de cisaillement puisque ces rainures délimitent des portions de matière plus sensibles à la déformation comparativement aux portions délimitées par des incisions. En effet, dans le cas d'incisions les parois de matière délimitant ces incisions peuvent venir en contact les unes sur les autres au moins dans le passage dans la région de contact avec la chaussée. Cette diminution de rigidité, dans le cas de la présence de rainures, induit une augmentation des déformations et génère une diminution de la performance en usure de la bande : on observe une usure plus importante pour une distance parcourue fixée (ceci correspond à une augmentation de la vitesse d'usure de la bande). En outre, on constate une augmentation de la résistance au roulement et donc de la consommation des véhicules équipés de tels pneus, résultant d'une augmentation des pertes hystérétiques liées aux cycles de déformations de la matière composant la bande de roulement.

Les Demanderesses ont constaté que les croisements de rainures étaient à l'origine d'une réduction des performances en roulage sur chaussée recouverte d'un film d'eau de forte hauteur. En effet, ces croisements génèrent des perturbations dans les écoulements dans chaque rainure.

Pour limiter l'abaissement de rigidité liée à la présence des rainures nécessitée par le besoin d'assurer le drainage de l'eau, il a été proposé une solution décrite dans la publication de brevet WO 2011/039194. Selon cette solution il est proposé une bande de roulement pour pneu ayant une épaisseur E, cette bande étant pourvue d'une pluralité de rainures ondulantes dans l'épaisseur. Chaque rainure ondulante est continue afin de permettre un écoulement de fluide et est formée dans la bande de roulement par une pluralité de cavités externes s'ouvrant sur la surface de roulement à l'état neuf et une pluralité de cavités internes, ces dernières étant placées radialement et en totalité à l'intérieur de la surface de roulement à l'état neuf. Les cavités internes peuvent être prévues pour être à des profondeurs différentes.

En outre, la continuité de la rainure ondulante est assurée par la présence de cavités de liaison reliant les cavités externes aux cavités internes. Chaque canal de liaison a deux extrémités connectées à une cavité interne d'une part et à une cavité externe d'autre part ; chaque canal de liaison présente des sections transversales (dans un plan de coupe perpendiculaire à la direction moyenne de la rainure) dont les aires sont égales respectivement aux aires des sections transversales des cavités interne et externe reliées par ce canal de liaison.

Grâce à la présence de ces cavités de liaison, il est possible d'assurer une circulation de l'eau d'une cavité externe vers une cavité interne et ainsi d'obtenir un meilleur drainage de l'eau en réduisant les pertes de charges hydrodynamiques.

De plus grâce à cette structure de bande de roulement, on obtient un volume de creux approprié pour réaliser un drainage satisfaisant tout en limitant la diminution de rigidité de la bande de roulement à l'état neuf.

Dans le présent document, la terminologie « cavité ondulante» dans la profondeur d'une bande de roulement désigne toute cavité continue ayant une géométrie ondulante dans la profondeur de la bande et telle qu'elle puisse s'ouvrir de façon discontinue sur la surface de roulement de la bande soit dès l'état neuf soit après une usure partielle. Cette cavité ondulante dès lors qu'elle est ouverte au moins en partie sur une surface de roulement par des cavités externes forme une rainure permettant une circulation de liquide, les cavités externes étant reliées entre elles par des cavités internes. Une cavité ondulante peut s'étendre sur plus de deux niveaux successifs dans l'épaisseur de la bande de roulement.

Ce même document décrit une bande comprenant une première pluralité de rainures ondulantes entre une première couche d'usure et une deuxième couche d'usure selon une première direction et une deuxième pluralité de rainures ondulantes dans les mêmes couches d'usure et dirigées dans une deuxième direction croisant la première direction pour former un réseau de rainures croisées. Ces première et deuxième pluralités de rainures sont agencées de manière que les cavités internes de ces première et deuxième pluralités de rainures soient connectées entre elles afin de renforcer l'effet de réseau.

Le problème qui a été décrit pour des bandes de roulement n'ayant que des rainures non ondulantes a été également constaté avec ce dernier type de bande de roulement.

### Définitions :

Plan médian équatorial : c'est un plan perpendiculaire à l'axe de rotation et passant par les points du pneu radialement les plus éloignés dudit axe.

Un bloc est un élément en relief formé sur la bande de roulement qui est délimité par des creux ou rainures et comprenant des parois latérales et une face de contact destinée à venir en contact avec la chaussée. Cette face de contact a un centre géométrique défini comme le barycentre ou centre de gravité de la face.

Une nervure est un élément en relief formé sur une bande de roulement, cet élément s'étendant dans la direction circonférentielle et faisant le tour du pneu. Une nervure comprend deux parois latérales et une face de contact, cette dernière étant destinée à venir en contact avec la chaussée pendant le roulage.

Par direction radiale, on entend dans le présent document une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

L'épaisseur totale E d'une bande de roulement est mesurée, sur le plan équatorial du pneu pourvu de cette bande, entre la surface de roulement et la partie radialement la plus à l'extérieur de l'armature de sommet à l'état neuf.

Une bande de roulement a une épaisseur maximale PMU de matière à user en roulage, cette épaisseur maximale PMU étant inférieure à l'épaisseur totale E.

Les conditions usuelles de roulage du pneu ou conditions d'utilisation sont celles qui sont définies par la norme E.T.R.T.O. pour des conditions européennes ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

Une découpure désigne de manière générique soit une rainure soit une incision et correspond à l'espace délimité par des parois de matière se faisant face et distantes l'une de l'autre d'une distance non nulle (dite "largeur de la découpure"). Ce qui différencie une incision d'une rainure c'est précisément cette distance ; dans le cas d'une incision, cette distance est appropriée pour permettre la mise en contact au moins partielle des parois opposées délimitant ladite incision au moins lors du passage dans le contact avec la chaussée. Dans le cas d'une rainure, les parois de cette rainure ne peuvent venir en contact l'une contre l'autre dans les conditions usuelles de roulage.

Dans le présent document une cavité désigne une rainure ou un canal destiné à former une nouvelle rainure après une usure partielle. Ce même terme peut désigner une combinaison de parties ouvertes sur une surface de roulement et de parties sous-jacentes à la surface de roulement, ces parties sous-jacentes reliant entre elles les parties ouvertes sur une surface de roulement de façon à former une cavité dite ondulante dans l'épaisseur de la bande de roulement.

### BREF EXPOSÉ DE L 'INVENTION

La présente invention vise à conserver une bonne performance de roulage par temps de pluie en proposant un dessin de sculpture d'une bande de roulement de pneu amélioré.

À cet effet, l'invention a pour objet une bande de roulement de pneu telle que décrite dans la revendication indépendante 1.

Avantageusement, la bande de roulement de pneu est telle qu'au moins la cavité orientée dans la deuxième direction est une cavité ondulante dans l'épaisseur de la bande de roulement de pneu, c'est-à-dire formée d'une succession de portions de cavité destinées à s'ouvrir sur la surface de roulement soit à l'état neuf soit après usure partielle et de portions de cavité localisées à l'intérieur de la bande de roulement de pneu.

Afin de faciliter la fabrication il est préférable que, dans le cas de la présence d'au moins une cavité ondulante selon la deuxième direction, une incision prolonge jusqu'à la surface de roulement à l'état neuf les portions de cavité localisées à l'intérieur de la bande de roulement de pneu.

Dans le cas d'une bande de roulement destinée à équiper un pneu pour véhicule poids lourd, la réduction de l'épaisseur de la bande de roulement peut conduire à des difficultés pour faire passer une cavité radialement sous une autre sans perturber le flux. Il est alors judicieux de modifier la section de la cavité dans sa partie passant radialement sous une autre cavité. Dans ce cas il est avantageux que la section transversale de la partie de cavité passant radialement sous l'autre cavité dans la région de croisement soit au moins égale à la section transversale de la cavité en dehors de la région de croisement. Ceci peut être réalisé par un élargissement approprié de la section transversale.

D'autres caractéristiques et avantages de l'invention ressortent de la description faite ci-après en référence aux dessins annexés qui montrent, à titre d'exemples non limitatifs, des formes de réalisation de l'objet de l'invention.

### BRÈVE DESCRIPTION DES FIGURES

La figure 1 représente une vue en coupe d'une première variante de bande de roulement de pneu selon l'invention ;
La figure 2 montre une vue en plan de la variante montrée avec la figure 1 ;
La figure 3 représente une variante de croisement ;
La figure 4 montre une vue en plan d'une autre variante de croisement ;
La figure 5 représente autre variante selon l'invention montrant un croisement de deux cavités ondulantes totalement contenues dans la bande de roulement de pneu.

### DESCRIPTION DES FIGURES

Pour faciliter la lecture des figures, des signes de référence identiques sont employés pour la description de variantes de l'invention dès lors que ces signes de référence renvoient à des éléments d'une même nature qu'elle soit structurelle ou bien fonctionnelle.

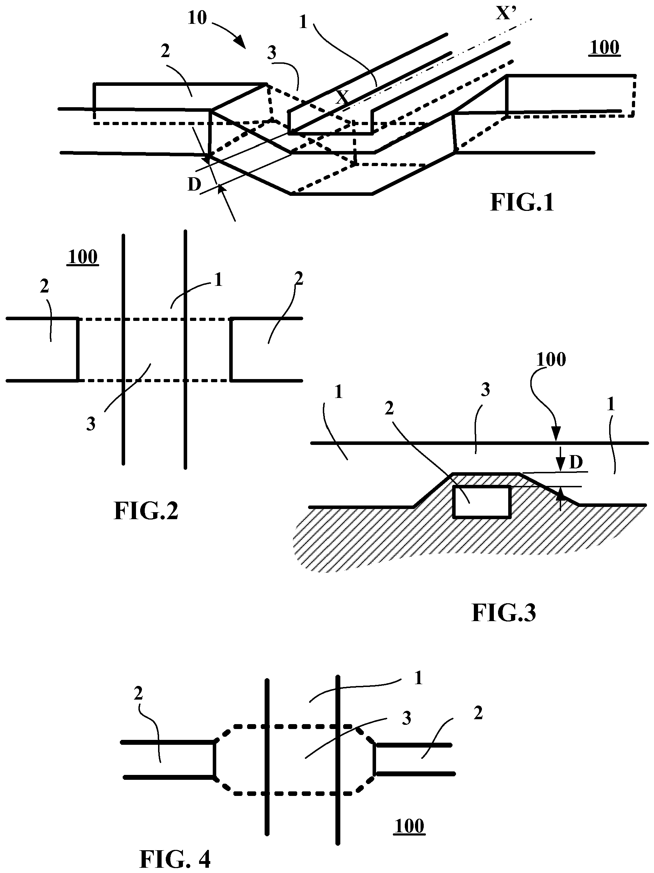

La figure 1 représente une vue partielle d'une première variante de bande de roulement 10 de pneu pour poids lourd. Selon cette variante, une première rainure 1 s'ouvre en totalité sur la surface de roulement 100 de la bande de roulement 10 à l'état neuf. Cette première rainure 1 s'étend dans une première direction notée XX'.

Une deuxième rainure 2 est orientée suivant une deuxième direction perpendiculaire à la première direction XX' ; cette deuxième rainure 2 croise la première rainure 1 dans une région de croisement 3. Dans cette région de croisement 3, la deuxième rainure 2 s'enfonce localement dans l'épaisseur de la bande de roulement pour passer radialement à l'intérieur de la première rainure 1 en ménageant un espace de matière ayant une épaisseur minimale D non nulle entre les première et deuxième rainures. Dans la région de croisement, la rainure 2 comprend deux parties obliques reliées par une partie rectiligne.

De cette façon, il est possible d'assurer la continuité du flux que ce soit dans la première rainure 1 ou la deuxième rainure 2 sans générer de perturbation entre les flux.

L'épaisseur minimale D est au moins égale à 0.1 mm. Encore plus préférentiellement cette épaisseur minimale D est au moins égale à 1 mm.

La figure 2 montre une vue en plan de la variante montrée avec la figure 1. On distingue sur cette figure 2, la rainure 1 s'ouvrant sur toute sa longueur sur la surface de roulement 100 à l'état neuf de la bande de roulement. Cette rainure 1 a une profondeur identique sur toute sa longueur ainsi qu'une largeur constante. La deuxième rainure 2 a une section transversale qui est constante quelle que soit la position considérée, notamment la section transversale est conservée dans la région de croisement 3.

Dans la variante montrée avec la figure 3, on a le même type de croisement de deux rainures 1 et 2 que celui montré avec les figures 1 et 2. Toutefois, la première rainure 1 a une profondeur réduite dans la région de croisement 3 afin de laisser le passage de la deuxième rainure 2 radialement à l'intérieur en ménageant une distance de matière de hauteur D. Cette variante est particulièrement intéressante lorsque les dimensions de la première rainure 1 ne permettent pas de faire passer la deuxième rainure 2 radialement à l'intérieur ou alors nécessiterait une réduction très sensible de la section de cette deuxième rainure dans cette région de croisement.

Dans la variante de la figure 4, la deuxième rainure 2 est modifiée afin de conserver la surface totale de sa section transversale dans sa partie passant radialement à l'intérieur de la première rainure 1. Pour cela, la section transversale de la rainure 2 est réduite en hauteur et augmentée en largeur dans la région de croisement 3. Ainsi il est possible de réaliser le croisement de deux rainures tout en conservant une bonne capacité à écouler un volume donné de liquide pendant le roulage.

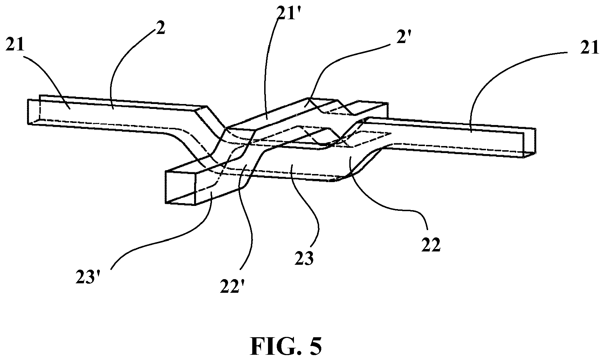

La variante montrée avec la figure 5 concerne la mise en oeuvre dans une bande de roulement de deux rainures ondulantes 2 et 2' formant chacune à l'état neuf une rainure continue ondulant dans l'épaisseur de la bande entre une surface de roulement destinée à venir en contact avec une chaussée et une profondeur au plus égale à l'épaisseur de matière à user en roulage.

Chacune de ces rainures ondulantes 2 et 2' s'ouvre à l'état neuf en plusieurs endroits sur la surface de roulement d'une bande de roulement à l'état neuf. Les ouvertures forment des cavités 21, 21' disjointes les unes des autres.

Par ailleurs, chaque rainure ondulante est continue grâce à la présence de parties de cavité 22, 22' respectivement qui relient les cavités ouvertes sur la surface de roulement à l'état neuf et les cavités 23, 23' formées à l'intérieur de la bande de roulement.

la première rainure ondulante est orientée dans une première direction tandis que la deuxième rainure ondulante est orientée dans une deuxième direction croisant la première direction. Ces deux rainures ondulantes sont agencées de manière à ce que dans la région de croisement, la première de ces rainures ondulantes comprend une partie ouverte sur la surface de roulement tandis que la deuxième rainure ondulante passe radialement à l'intérieur de la première rainure. L'épaisseur minimale entre les deux rainures ondulantes est au moins égale à 0.1mm mais bien entendu pourrait être sensiblement plus grande comme par exemple 1 mm ou plus.

De cette façon à l'état neuf, lors d'un roulage sur chaussée revêtue d'eau par temps de pluie par exemple, la continuité des rainures ondulantes assure un bon écoulement de l'eau dans chaque rainure et la mise en oeuvre de l'invention empêche que chaque flux de liquide dans une rainure n'interfère pas avec le flux dans l'autre rainure.

Sur cette figure 5 ne sont représentées que les rainures ondulantes. Afin de faciliter le moulage de telles rainures, il est préférable de prolonger les parties de rainures passant à l'intérieur de la bande de roulement dans la région de croisement par des incisions lesquelles n'affectent pas de manière sensible les écoulements dans chaque rainure. Ces incisions relient les parties sous la surface de roulement à ladite surface de roulement.

Sur la figure 5 on ne montre que le croisement de deux rainures ondulantes, mais on peut aisément concevoir la formation d'une rainure ondulante comportant une pluralité de régions de croisement avec une pluralité de rainures croisant cette rainure ondulante.

L'invention concerne également un pneu pour véhicule poids lourd pourvu d'une bande de roulement telle que décrite.

Bien entendu, l'invention n'est pas limitée aux exemples décrits et représentés et diverses modifications peuvent y être apportées sans sortir du cadre tel que défini par les revendications. Notamment, ce qui a été décrit avec une première rainure et une deuxième rainure pourrait aisément se concevoir avec plus de deux rainures se croisant dans une même région de croisement.

## Revendications

1. Bande de roulement (10) de pneu comprenant une surface de roulement (100) destinée à venir en contact avec une chaussée, cette bande de roulement (10) ayant une épaisseur totale et comprenant une pluralité de cavités (1, 2), au moins une première cavité (1) étant orientée suivant une première direction (X-X') et au moins une deuxième cavité (2) étant orientée suivant une deuxième direction différente de la première direction (X-X'), ces première et deuxième cavités (1, 2) s'ouvrant à l'état neuf ou après usure partielle sur la surface de roulement (100), la première cavité (1) croisant la deuxième cavité (2) dans une région de croisement (3), cette bande de roulement (10) de pneu étant **caractérisée en ce que** dans la région de croisement (3) de la première cavité (1) et de la deuxième cavité (2), l'une de ces deux cavités (1, 2) passe radialement sous l'autre cavité en ayant, dans cette région de croisement (3), une distance minimale (D) non nulle entre ces cavités (1, 2) afin que le flux circulant dans une de ces cavités (1, 2) ne perturbe pas le flux circulant dans l'autre cavité.

2. Bande de roulement (10) de pneu selon la revendication 1 **caractérisée en ce qu'**au moins la cavité orientée dans la deuxième direction est une cavité ondulante (2) dans l'épaisseur de la bande de roulement (10) de pneu, c'est-à-dire formée d'une succession de portions de cavité (21) destinées à s'ouvrir sur la surface de roulement (100) soit à l'état neuf soit après usure partielle et de portions de cavité (22, 23) localisées à l'intérieur de la bande de roulement (10) de pneu.

3. Bande de roulement (10) de pneu selon la revendication 2 **caractérisée en ce qu'**une incision prolonge jusqu'à la surface de roulement (100) à l'état neuf les portions de cavité (22, 23) localisées à l'intérieur de la bande de roulement (10) de pneu.

4. Bande de roulement (10) de pneu selon l'une quelconque des revendications 1 à 3 **caractérisée en ce que** chaque cavité (1, 2) ayant une section transversale, la section transversale de la partie de cavité (2) passant radialement sous l'autre cavité dans la région de croisement (3) est au moins égale à la section transversale de la cavité (2) en dehors de la région de croisement (3) ceci pour faciliter le flux dans la cavité (2) passant sous l'autre.

5. Pneu pour véhicule poids lourd **caractérisé en ce qu'**il est pourvu d'une bande de roulement (10) selon l'une quelconque des revendications 1 à 4.

## Patentansprüche

1. Reifenlauffläche (10), umfassend eine Laufoberfläche (100), die dazu bestimmt ist, mit einer Fahrbahn in Kontakt zu kommen, wobei diese Lauffläche (10) eine Gesamtdicke hat und eine Vielzahl von Hohlräumen (1, 2) umfasst, wobei mindestens ein erster Hohlraum (1) in eine erste Richtung (X-X') ausgerichtet ist, und mindestens ein zweiter Hohlraum (2) in eine zweite Richtung, die sich von der ersten Richtung (X-X') unterscheidet, ausgerichtet ist, wobei sich diese ersten und zweiten Hohlräume (1, 2) im Neuzustand oder nach teilweisem Verschleiß auf der Laufoberfläche (100) öffnen, wobei der erste Hohlraum (1) den zweiten Hohlraum (2) in einem Kreuzungsbereich (3) kreuzt, wobei diese Reifenlauffläche (10) **dadurch gekennzeichnet ist, dass** der Kreuzungsbereich (3) des ersten Hohlraums (1) und des zweiten Hohlraums (2) eines dieser zwei Hohlräume (1, 2) radial unter dem anderen Hohlraum verläuft, wobei in diesem Kreuzungsbereich (3) ein Mindestabstand (D) ungleich Null zwischen diesen Hohlräumen (1, 2) vorhanden ist, so dass der in einem dieser Hohlräume (1, 2) zirkulierende Strom den in dem anderen Hohlraum zirkulierenden Strom nicht stört.

2. Reifenlauffläche (10) nach Anspruch 1, **dadurch gekennzeichnet, dass** mindestens der Hohlraum, der in die zweite Richtung ausgerichtet ist, ein wellenförmiger Hohlraum (2) in der Dicke der Reifenlauffläche (10) ist, d.h. von einer Aufeinanderfolge von Hohlraumabschnitten (21), die dazu bestimmt sind, sich auf der Laufoberfläche (100) entweder im Neuzustand oder nach teilweisem Verschleiß zu öffnen, und von Hohlraumabschnitten (22, 23) gebildet ist, die innerhalb der Reifenlauffläche (10) lokalisiert sind.

3. Reifenlauffläche (10) nach Anspruch 2, **dadurch gekennzeichnet, dass** ein Einschnitt die Hohlraumabschnitte (22, 23), die innerhalb der Reifenlauffläche (10) lokalisiert sind, bis zur Laufoberfläche (100) im Neuzustand verlängert.

4. Reifenlauffläche (10) nach einem der Ansprüche 1 bis 3, **dadurch gekennzeichnet, dass** jeder Hohlraum (1, 2) einen Querschnitt hat, wobei der Querschnitt des Hohlraumteils (2), der radial unter dem anderen Hohlraum in dem Kreuzungsbereich (3) verläuft, mindestens gleich dem Querschnitt des Hohlraums (2) außerhalb des Kreuzungsbereichs (3) ist, um den Strom in dem Hohlraum (2), der unter dem anderen verläuft, zu erleichtern.

5. Reifen für einen Lastkraftwagen, **dadurch gekennzeichnet, dass** er mit einer Lauffläche (10) nach einem der Ansprüche 1 bis 4 versehen ist.

## Claims

1. Tyre tread (10) comprising a tread surface (100) intended to come into contact with a roadway, this tread (10) having a total thickness and comprising a plurality of cavities (1, 2), at least a first cavity (1) being oriented in a first direction (x-x') and at least a second cavity (2) being oriented in a second direction different from the first direction (x-x'), these first and second cavities (1, 2) opening when the tread is new or part worn onto the tread surface (100), the first cavity (1) crossing the second cavity (2) in a region of crossing (3), this tyre tread (10) being **characterized in that**, in the region of crossing (3) of the first cavity (1) and the second cavity (2), one of these two cavities (1, 2) passes radially underneath the other cavity, there being, in this region of crossing (3), a non-zero minimum distance (D) between these cavities (1, 2) so that the flow circulating along one of these cavities (1, 2) does not disturb the flow circulating along the other cavity.

2. Tyre tread (10) according to Claim 1, **characterized in that** at least the cavity oriented in the second direction is a wavy cavity (2) with waviness in the thickness of the tyre tread (10), which means to say formed of a succession of cavity portions (21) which are intended to open onto the tread surface (100) either when the tread is new or when it is part worn, and of cavity portions (22, 23) located within the tyre tread (10).

3. Tyre tread (10) according to Claim 2, **characterized in that** a sipe extends as far as the tread surface (100) when the tread is new those cavity portions (22, 23) that are located within the tyre tread (10).

4. Tyre tread (10) according to any one of Claims 1 to 3, **characterized in that** with each cavity (1, 2) having a cross section, the cross section of the cavity portion (2) that passes radially underneath the other cavity in the region of crossing (3) is at least equal to the cross section of the cavity (2) outside of the region of crossing (3), the purpose of this being to facilitate flow in the cavity (2) that passes underneath the other.

5. Tyre for a heavy goods vehicle, **characterized in that** it is provided with a tread (10) according to any one of Claims 1 to 4.
